# EUROPÄISCHE PATENTANMELDUNG

(11) **EP 1 721 820 A2**
(43) Veröffentlichungstag der Anmeldung: **15.11.2006**
(21) Anmeldenummer: 06009842.3
(22) Anmeldetag: 12.05.2006
(51) Int. Cl.: B62K 21/06

(54) **Steuerkopflager**

(30) Priorität: 13.05.2005 DE 102005022219
(71) Anmelder: JESA AG, 1752 Villars-sur Glane (CH)
(72) Erfinder: Bauer, Andreas Beat, 8123 Ebmatingen (CH)
(74) Vertreter: Manitz, Finsterwald & Partner GbR

(57) **Zusammenfassung**

Die Erfindung betrifft ein Steuerkopflager mit einer Lagereinheit zum drehbaren Verbinden eines Kopfrohrs mit einem durch das Kopfrohr hindurch geführten Steuerrohr, wobei eine erste Lageraufnahme vorgesehen ist, die mit dem Steuerrohr drehfest verbindbar ist, eine zweite Lageraufnahme vorgesehen ist, die mit dem Kopfrohr drehfest verbindbar ist, und die Lagereinheit zwischen der ersten Lageraufnahme und der zweiten Lageraufnahme im Presssitz angeordnet ist.

## Beschreibung

Die vorliegende Erfindung betrifft ein Steuerkopflager, ausgebildet zum drehbaren Verbinden eines Kopfrohrs mit einem durch das Kopfrohr hindurch geführten Steuerrohr. Weiterhin ist die Erfindung auf eine Steuerkopflageranordnung mit einem solchen Steuerkopflager gerichtet.

Steuerkopflager dieser Art werden insbesondere bei Fahrrädern, aber auch bei Dreirädern oder sonstigen ähnlichen Fahrzeugen verwendet. Das Kopfrohr ist dabei üblicherweise Teil des Fahrzeugrahmens, während das Steuerrohr als Schaft der Fahrzeuggabel ausgebildet ist. Am Ende des Gabelschafts ist eine Längsstange befestigt. Diese kann entweder direkt an dem Gabelschaft oder über einen entsprechenden Vorbau an dem Gabelschaft befestigt sein.

An dem oberen und an dem unteren Ende des Kopfrohrs sind Steuerkopflager angeordnet, die üblicherweise als Kugellager ausgebildet sind. Durch diese Steuerkopflager ist ein Verdrehen des Steuerrohrs in dem Kopfrohr und damit ein entsprechendes Verdrehen der Fahrzeuggabel möglich.

Bei einer bekannten Steuerkopflageranordnung ist das obere Ende des Steuerrohrs mit einem Außengewinde versehen, über das eine mit einem Innengewinde versehene Befestigungsmutter soweit aufschraubbar ist, bis sie an dem unteren Steuerkopflager zur Anlage kommt. Bei entsprechendem Festziehen der Mutter wird der obere Laufring des Steuerkopflagers gegen den unteren Laufring gesichert, so dass auf diese Weise das Spiel in dem Steuerkopflager einstellbar ist.

Problematisch an dieser Vorrichtung ist, dass die auf das Steuerkopflager drückende Vorlast nur schwer einstellbar ist. Während bei einem zu festen Anziehen der Befestigungsmutter das Steuerkopflager schwergängig wird, ist bei einem zu leichten Anziehen die erforderliche Spielfreiheit des Steuerkopflagers nicht gewährleistet. Weiterhin kann sich im Betrieb des Fahrzeugs aufgrund der Schwenkbewegungen des Steuerrohrs die Mutter lösen und dadurch eine ungewollte Verstellung des Steuerkopflagers erfolgen. Letztlich ist auch die Montage und Justage des Steuerkopflagers relativ aufwändig.

Bei einer weiteren Steuerkopflageranordnung besitzt der obere Laufring des oberen Steuerkopflagers eine ringförmige Schrägfläche, gegen die ein ebenfalls mit einer Schrägfläche versehener Druckring gepresst wird, der sowohl eine radiale als auch eine axiale Kraft auf den oberen Laufring des Steuerkopflagers aufbringt. Während durch die axiale Kraft wiederum der obere Laufring gegen den unteren Laufring gesichert wird, wird gleichzeitig durch die radial wirkende Kraft eine Fixierung des oberen Laufrings an dem Steuerrohr erreicht. Zur Beaufschlagung des Druckrings von oben mit einer entsprechenden Kraft ist das Steuerrohr mit einem Innengewinde versehen, in das eine mit einem Außengewinde versehene Einstellmutter bzw. eine Einstellschraube eingeschraubt wird. Über diese wird ein auf der Oberseite des Druckrings aufliegender Schaft des Fahrzeuglenkers gegen den Druckring nach unten gedrückt, so dass die auf den Druckring und damit auf den oberen Laufring wirkende Kraft einstellbar ist.

Problematisch an dieser Steuerkopflageranordnung ist ebenfalls, dass die auf das Steuerkopflager drückende Vorlast nur relativ schwierig einstellbar ist. Auch bei dieser Anordnung kann durch ein zu festes oder zu lockeres Anziehen der Einstellmutter bzw. der Einstellschraube die auf das Steuerkopflager wirkende Kraft zu stark oder zu leicht eingestellt werden, so dass das Steuerkopflager entweder schwergängig ist oder ein zu großes Spiel aufweist. Des Weiteren ist auch bei dieser Ausführungsform die Montage und Justierung relativ aufwändig, insbesondere da der erste und der zweite Laufring des Steuerkopflagers separat montiert werden müssen.

Es ist eine Aufgabe der vorliegenden Erfindung, ein Steuerkopflager der eingangs genannten Art so auszubilden, dass die Montage und Wartung erleichtert wird, wobei gleichzeitig eine einwandfreie Funktion und Leichtgängigkeit des Steuerkopflagers gewährleistet sein soll.

Ausgehend von einem Steuerkopflager der eingangs genannten Art wird diese Aufgabe erfindungsgemäß dadurch gelöst, dass eine erste Lageraufnahme vorgesehen ist, die mit dem Steuerrohr drehfest verbindbar ist, dass eine zweite Lageraufnahme vorgesehen ist, die mit dem Kopfrohr drehfest verbindbar ist, und dass die Lagereinheit zwischen der ersten Lageraufnahme und der zweiten Lageraufnahme im Presssitz angeordnet ist.

Im Gegensatz zum Stand der Technik ist bei dem erfindungsgemäß ausgebildeten Steuerkopflager somit die Lagereinheit nicht direkt mit dem Steuerrohr und dem Kopfrohr verbunden, sondern im Presssitz zwischen einer separaten, ersten steuerrohrseitig angeordneten Lageraufnahme und einer zweiten, kopfrohrseitig angeordneten Lageraufnahme angeordnet. Dadurch bildet das erfindungsgemäße Steuerkopflager eine vormontierte Einheit, die bereits vor der Montage am Steuerrohr bzw. am Kopfrohr eine eigenständige, in sich geschlossene Einheit ist. Insbesondere ist es durch die Vormontage möglich, die Lagereinheit spielfrei bzw. mit einem gewünschten Spiel einzustellen und gleichzeitig sicherzustellen, dass das voreingestellte Spiel durch die Montage des Steuerkopflagers an dem Steuerrohr bzw. am Kopfrohr nicht beeinflusst wird.

Im Gegensatz zum Stand der Technik, bei dem gerade durch das Montieren des Steuerkopflagers am Kopfrohr und am Steuerrohr das Spiel der Lagereinheit eingestellt wird, ist die Leichtgängigkeit der Lagereinheit des erfindungsgemäßen Steuerkopflagers somit nicht von der Montage am Steuerrohr bzw. am Kopfrohr abhängig. Demgemäß kann die Leichtgängigkeit des erfindungsgemäßen Steuerkopflagers auch nicht durch eine Fehleinstellung des Benutzers, beispielsweise beim Einstellen der Lenkstange, nachteilig verändert werden, so dass zum einen die Leichtgängigkeit und zum anderen die Spielfreiheit des Steuerkopflagers in allen Fällen gewährleistet sind.

Weiterhin wird durch das erfindungsgemäß ausgebildete Steuerkopflager die Montage deutlich vereinfacht, da die Vorspannung der Lagereinheit unabhängig von der Befestigung des Steuerkopflagers ist und somit bei der Montage keine speziellen Maßnahmen getroffen werden müssen, um die Spielfreiheit des Steuerkopflagers zu erhalten und eine unerwünschte Schwergängigkeit zu vermeiden.

Nach einer vorteilhaften Ausführungsform der Erfindung ist die Lagereinheit durch den Presssitz spielfrei in axialer und/oder radialer Richtung vorgespannt. Dadurch, dass die Lagereinheit automatisch aufgrund der Vormontage durch den Presssitz spielfrei vorgespannt ist, ist das erfindungsgemäße Steuerkopflager praktisch wartungsfrei. Das Spiel im gesamten Steuerkopflager muss nie mühsam von Hand eingestellt werden, auch wenn beispielsweise der Lenker und/oder der Vorbau demontiert und wieder neu montiert wird. Abhängig von dem gewählten Presssitz kann dabei die gewünschte Leichtgängigkeit und/oder eine gewünschte Lenkungsdämpfung voreingestellt werden.

Bevorzugt ist die Lagereinheit mit der ersten und/oder zweiten Lageraufnahme über einen Presssitz verbunden. Es ist somit möglich, dass die Lagereinheit nur mit dem ersten, nur mit dem zweiten oder mit beiden Lageraufnahmen über einen Presssitz verbunden ist, um beispielsweise die gewünschte Spielfreiheit zu erreichen. Insbesondere, wenn die Lagereinheit sowohl mit der ersten als auch mit der zweiten Lageraufnahme über einen Presssitz verbunden ist, ist eine besonders einfache Ausbildung des Steuerkopflagers möglich, da in diesem Fall die erste und zweite Lageraufnahme unmittelbar durch die Lagereinheit selbst miteinander verbunden sind und somit keine weiteren Maßnahmen getroffen werden müssen, um die erste Lagereinheit mit der zweiten Lagereinheit zu verbinden und eine vorgefertigte, in sich geschlossene Einheit des Steuerkopflagers zu erreichen.

Nach einer weiteren vorteilhaften Ausführungsform der Erfindung ist ein Befestigungselement vorgesehen, über das die erste Lageraufnahme drehfest mit dem Steuerrohr verbindbar ist. Über das Befestigungselement erfolgt bei der Montage des Steuerkopflagers eine drehfeste Verbindung der ersten Lageraufnahme mit dem Steuerrohr, ohne dass die durch die Vormontage erzielte Spielfreiheit der Lagereinheit beeinflusst wird.

Insbesondere ist nach einer vorteilhaften Ausführungsform der Erfindung durch das Befestigungselement zum Verbinden der ersten Lageraufnahme mit dem Steuerrohr eine in radiale Richtung wirkende Kraft zwischen der ersten Lageraufnahme und dem Steuerrohr erzeugbar. Bevorzugt wird dabei durch das Befestigungselement eine ausschließlich in radiale Richtung wirkende Kraft erzeugt.

Durch die in radiale Richtung wirkende Kraft ist eine Befestigung der ersten Lageraufnahme an dem Steuerrohr ohne Auswirkung auf die axiale Vorspannung des Steuerkopflagers möglich.

Vorteilhaft ist das Befestigungselement als Klemmelement zur Erzeugung einer Klemmverbindung zwischen der ersten Lageraufnahme und dem Steuerrohr ausgebildet. Das Klemmelement kann dabei als separates Teil oder einstückig mit der ersten Lageraufnahme ausgebildet sein, wodurch die Anzahl der Einzelbauteile des Steuerkopflagers weiter reduziert werden kann.

Nach einer weiteren bevorzugten Ausführungsform der Erfindung ist das Klemmelement als Klemmring ausgebildet. Der Klemmring kann dabei insbesondere in seiner Weite verstellbar sein. Durch die Ausbildung als Klemmring ist eine besonders gleichmäßige Kraftverteilung über den Umfang des Steuerrohrs möglich. Weiterhin ist mit einem Klemmelement eine nachträgliche leichte Demontage des Steuerkopflagers möglich, so dass die Wartung eines erfindungsgemäi3 ausgebildeten Steuerkopflagers erleichtert wird.

Der Klemmring kann beispielsweise mehrteilig ausgebildet sein, wobei die einzelnen Abschnitte des Klemmrings gelenkig miteinander verbunden sind. Zwei voneinander beabstandete Enden des Klemmrings können über eine Schraube miteinander so verbunden sein, dass beim Verdrehen der Schraube die Weite des Klemmrings verringert wird, wodurch der Klemmring und damit die erste Lageraufnahme drehfest mit dem Steuerrohr verbunden wird. Grundsätzlich kann anstelle einer Schraube auch ein Spannelement verwendet werden, wie es beispielsweise bei Schnellspannvorrichtungen, insbesondere beim Befestigen von Sattelstützen, eingesetzt wird. Der Klemmring kann auch einstückig ausgebildet sein und beispielsweise aus elastischem Material bestehen.

Nach einer weiteren bevorzugten Ausführungsform der Erfindung umfasst die erste Lageraufnahme einen insbesondere ringförmigen Klemmansatz, der von dem Klemmring umgriffen wird, so dass der Klemmansatz zwischen dem Steuerrohr und dem Klemmring einklemmbar ist. Der Klemmansatz ist dabei bevorzugt elastisch ausgebildet, um ein sicheres und einfaches Verklemmen der Laufringeinheit zu ermöglichen. Weiterhin können in dem Klemmansatz Unterbrechungen, beispielsweise in Form von Schlitzen, ausgebildet sein, um die gewünschte Elastizität zu erreichen.

Nach einer weiteren vorteilhaften Ausführungsform umfasst die zweite Lageraufnahme einen ein stirnseitiges freies Ende aufweisenden, ringförmigen Verbindungsabschnitt, der im Presssitz in das Kopfrohr einsetzbar ist. Ein erfindungsgemäß ausgebildetes Steuerkopflager kann dabei sowohl als oberes wie auch als unteres Lager auf beiden Enden des Kopfrohrs aufgesetzt und im Presssitz in dieses eingesetzt werden. Sowohl das obere als auch das untere Steuerkopflager können dabei über ihr jeweiliges Klemmelement in einfacher Weise nach Einsetzen des Steuerrohrs in das Kopfrohr mit dem Steuerrohr drehfest verbunden werden.

Die Außenfläche des ringförmigen Verbindungsabschnitts kann glatt oder beispielsweise randriert ausgebildet sein. Bei Verwendung der randrierten Ausführung kann das Toleranzfeld der Rahmenbohrung im Kopfrohr vergrößert werden, so dass die Herstellung vereinfacht wird.

Nach einer weiteren vorteilhaften Ausführungsform der Erfindung ist die Lagereinheit als Radiallager mit Innen- und Außenring ausgebildet. Durch die Verwendung eines Radiallagers ist ein getrennter Presssitz der Lagereinheit sowohl auf der ersten als auch in der zweiten Lageraufnahme möglich, wobei gleichzeitig der Innen- und Außenring gegeneinander verdrehbar bleiben. Darüber hinaus ist eine Vorspannung der Lagereinheit bei gleichzeitiger Verbindung von erster und zweiter Lageraufnahme möglich.

Bevorzugt umfasst die erste Lageraufnahme einen insbesondere ringförmigen stirnseitigen Aufnahmeansatz, auf dem der Innenring der Lagereinheit im Presssitz angeordnet ist. Dabei kann die radial innen liegende Oberfläche des Aufnahmeansatzes im Wesentlichen zylindrisch, konisch oder fassförmig ausgebildet sein. Gleiches gilt auch für die radial außen liegende Oberfläche des Aufnahmeansatzes. Durch die entsprechende Wahl der innen und/oder außen liegende Oberfläche des Aufnahmeansatzes kann die durch den Presssitz erzeugte Kraftverteilung optimiert werden, so dass sowohl eine axiale wie auch eine radiale Vorspannung der Lagereinheit sowie Mischformen davon erzeugt werden können. Grundsätzlich sind weitere Ausgestaltungen der radial innen und/oder außen liegenden Oberfläche des Aufnahmeansatzes, beispielsweise mit insbesondere umlaufenden Vertiefungen oder Erhöhungen denkbar, um eine optimale Presssitzgestaltung zu erreichen.

Nach einer weiteren bevorzugten Ausführungsform der Erfindung umfasst die zweite Lageraufnahme einen innen liegenden Aufnahmeabschnitt, in dem der Außenring der Lagereinheit im Presssitz angeordnet ist. Bevorzugt wird dabei der Aufnahmeabschnitt in radialer Richtung nach außen von einem insbesondere ringförmigen Wandabschnitt der zweiten Lageraufnahme begrenzt. Auch in diesem Fall kann die radial innen und/oder außen liegende Oberfläche des Wandabschnitts im Wesentlichen zylindrisch, konisch oder fassförmig ausgebildet sein oder eine oder mehrere insbesondere umlaufende Vertiefungen oder Erhöhungen aufweisen, um eine optimale Presssitzgestaltung sowie die gewünschte axiale und/oder radiale Vorspannung der Lagereinheit zu erreichen.

Die Lagereinheit ist bevorzugt als Standard-Industrielager ausgebildet. Dadurch werden zum einen die Herstellungskosten des erfindungsgemäßen Steuerkopflagers verringert und zum anderen wird eine gleich bleibend hohe Qualität des Steuerkopflagers gewährleistet.

Die Lagereinheit kann dabei als beispielsweise als Rillenkugellager oder als Vierpunktlager ausgebildet sein. Um beispielsweise eine minimale oder mittlere Lenkungsdämpfung zu erreichen, ist ein Vierpunktlager vorteilhaft, da hier Axial- und Radialspiel kleiner sind und zudem eine höhere Axialbelastung möglich ist. Bei einer gewünschten starken Lenkungsdämpfung kann hingegen vorteilhaft ein Rillenkugellager verwendet werden.

Grundsätzlich kann die Lagereinheit auch als sonstiges Wälzlager, beispielsweise als Zylinder-, Doppelkegel- oder Nadellager ausgebildet sein.

Vorteilhaft bilden die erste und zweite Lageraufnahme ein Gehäuse für die Lagereinheit, welches, mit Ausnahme der zentralen Axialbohrung zur Auf nahme des Steuerrohrs, im vormontierten Zustand im Wesentlichen eine geschlossene Oberfläche besitzt. Durch das Lagergehäuse ist gewährleistet, dass die radiale und/oder axiale Vorspannung des Steuerkopflagers durch außen an dem Gehäuse angreifende Kräfte nicht beeinflusst wird. Weiterhin ist ein Eindringen von Schmutz und Feuchtigkeit und damit eine Beeinträchtigung der Funktionstüchtigkeit des erfindungsgemäßen Steuerkopflagers praktisch ausgeschlossen.

Während beschrieben wurde, dass die erste Lageraufnahme einen stirnseitigen Aufnahmeansatz umfasst, der von dem Innenring der Lagereinehit im Presssitz umgriffen wird, und die zweite Lageraufnahme einen innen liegenden Aufnahmeabschnitt umfasst, in dem der Außenring der Lagereinheit angeordnet ist, ist es grundsätzlich möglich, dass als Alternative ein entsprechender Aufnahmeansatz an der zweiten Lageraufnahme und ein entsprechender innen liegender Aufnahmeabschnitt an der ersten Lageraufnahme ausgebildet ist. In diesem Fall würde somit der Innenring der Lagereinheit den Aufnahmeansatz der zweiten Lageraufnahme umgreifen, während der Außenring der Lagereinheit in dem Aufnahmeabschnitt der ersten Lageraufnahme angeordnet wäre.

Der Aufnahmeansatz sowie der innen liegende Aufnahmeabschnitt können dabei entsprechend den oben beschriebenen Ausführungsformen ausgestaltet sein.

Weitere vorteilhafte Ausführungsformen der Erfindung sind in den Unteransprüchen angegeben.

Die Erfindung wird nachfolgend anhand eines Ausführungsbeispiels unter Bezugnahme auf die Zeichnungen näher beschrieben; in diesen zeigen:
- Fig. 1: eine perspektivische Darstellung einer erfindungsgemäß ausgebildeten Steuerkopflageranordnung,
- Fig. 2 und 3: die Lageranordnung nach Fig. 1, wobei die Einzelteile jeweils separat dargestellt sind,
- Fig. 4: eine Explosionsdarstellung eines erfindungsgemäß ausgebildeten Steuerkopflagers,
- Fig. 5: einen Längsschnitt durch die Einzelteile des Steuerkopflagers nach Fig. 4
- Fig. 6: einen Längsschnitt durch ein erfindungsgemäß ausgebildetes Steuerkopflager im zusammengebauten Zustand,
- Fig. 7 bis 9: drei Schritte während der Montage einer erfindungsgemäß ausgebildeten Steuerkopflageranordnung,
- Fig. 10: eine alternative Ausführungsform einer Lagereinheit des erfindungsgemäß ausgebildeten Steuerkopflagers,
- Fig. 11 und 12: zwei Ansichten einer alternativen Ausführungsform einer Abdeckkappe eines erfindungsgemäß ausgebildeten Steuerkopflagers,
- Fig. 13 und 14: zwei alternative Ausführungsformen eines Klemmrings eines erfindungsgemäß ausgebildeten Steuerkopflagers und
- Fig. 15: vier Längsschnitte durch vier alternative Ausführungsformen der zweiten Lageraufnahme eines erfindungsgemäß ausgebildeten Steuerkopflagers.

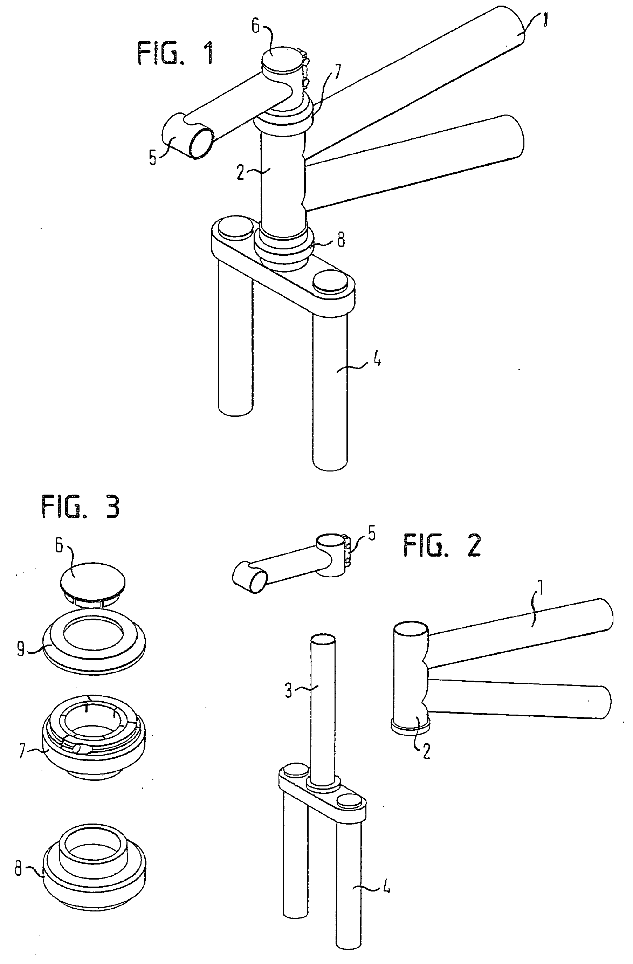

Fig. 1 zeigt einen Teil eines Fahrzeugrahmens 1 eines Fahrrads mit einem Kopfrohr 2, durch das ein Steuerrohr 3 (siehe Fig. 2) einer Gabel 4 hindurchgeführt ist.

Im oberen Bereich des Steuerrohrs 3 ist ein Vorbau 5 einer nicht dargestellten Lenkstange befestigt, wobei das durch den Vorbau 5 hindurch gesteckte freie Ende des Steuerrohrs 3 durch eine Abdeckkappe 6 abgedeckt ist.

Am oberen Ende des Kopfrohrs 2 ist ein Steuerkopflager 7 angeordnet, über das das Steuerrohr 3 drehbar mit dem Kopfrohr 2 verbunden ist. In analoger Weise ist an dem unteren Ende des Kopfrohrs 2 ein unteres Steuerkopflager 8 vorgesehen, welches ebenfalls das Steuerrohr 3 drehbar mit dem Kopfrohr 2 verbindet.

An der Oberseite des oberen Steuerkopflagers 7 ist ein Abdeckring 9 vorgesehen, der insbesondere aus Fig. 3 deutlich zu erkennen ist.

Das obere Steuerkopflager 7 und das untere Steuerkopflager 8 sind im Wesentlichen identisch ausgebildet und werden gemäß Fig. 1 lediglich um 180° gegeneinander verdreht an dem Kopfrohr 2 befestigt. Falls das Kopfrohr 2 oder das Steuerrohr 3 an den Verbindungsstellen mit den Steuerkopflagern 7 und 8 unterschiedliche Durchmesser besitzen, können die Steuerkopflager 7, 8 diesbezüglich unterschiedlich angepasst sein.

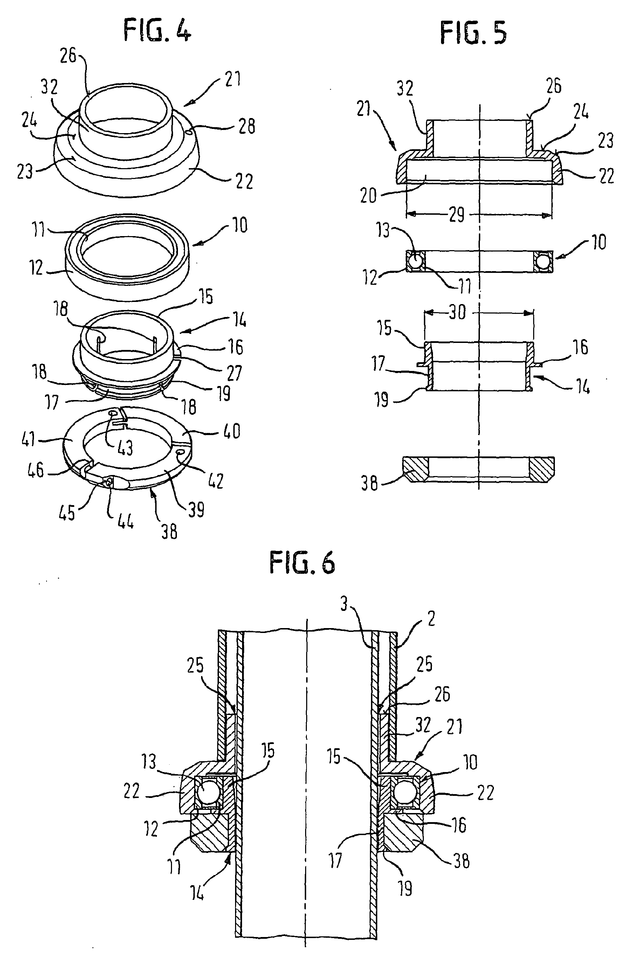

Der nähere Aufbau der erfindungsgemäß ausgebildeten Steuerkopflager ist in Fig. 4 anhand des unteren Steuerkopflagers 8 im Einzelnen dargestellt.

Das Steuerkopflager 8 umfasst eine als Radialkugellager ausgebildete Lagereinheit 10 mit einem Innenring 11, einem Außenring 12 und zwischen diesen angeordneten Kugellagerkugeln 13 (siehe Fig. 5). Die Lagereinheit 10 ist dabei als vorgefertigtes, insbesondere geschlossenes Industrielager ausgebildet.

In Fig. 4 ist unterhalb der Lagereinheit 10 eine erste Lageraufnahme 14 dargestellt, deren der Lagereinheit 10 zugewandtes freies Ende als ringförmiger Aufnahmeansatz 15 ausgebildet ist. Der Außendurchmesser des Aufnahmeansatzes 15 ist dabei so groß ausgebildet, dass die Lagereinheit 10 mit ihrem Innenring 11 im Presssitz auf den Aufnahmeansatz 15 aufgepresst werden kann.

Zur Begrenzung beim Aufpressen ist an der Außenseite der ersten Lageraufnahme 14 ein umlaufender Steg 16 ausgebildet, an dem die Lagereinheit 10 nach dem vollständigen Aufpressen auf den Aufnahmeansatz 14 zur Anlage kommt.

Auf der anderen Seite des umlaufenden Stegs 16 ist die erste Lageraufnahme 14 als ringförmiger Klemmansatz 17 ausgebildet, über dessen Umfang voneinander beabstandete, in axiale Richtung verlaufende schlitzförmige Ausnehmungen 18 ausgebildet sind. Weiterhin ist an dem freien Ende des Klemmansatzes 17 eine ringförmig umlaufende Schulter 19 vorgesehen.

Der Außenring 12 der Lagereinheit 10 ist in einen innen liegenden Aufnahmeabschnitt 20 (Fig. 5) einer in Fig. 4 oberhalb der Lagereinheit 10 angeordneten zweiten Lageraufnahme 21 einsetzbar. Dabei besitzt der Außendurchmesser des Außenrings 12 eine etwas größere Abmessung als der freie Innendurchmesser des innen liegenden Aufnahmeabschnitts 20, so dass die Lagereinheit 10 in den innen liegenden Aufnahmeabschnitt 20 der zweiten Lageraufnahme 21 ebenfalls im Presssitz einsetzbar ist.

Durch die beiden Presssitze des Innenrings 11 und des Außenrings 12 werden die erste und die zweite Lageraufnahme 14, 21 fest miteinander verbunden, wobei die Verdrehbarkeit der ersten und zweiten Lageraufnahmen 14, 21 gegeneinander erhalten bleibt.

Die zweite Lageraufnahme 21 umfasst einen ringförmigen Wandabschnitt 22, durch den der Aufnahmeabschnitt 20 in radialer Richtung nach außen begrenzt wird. An den ringförmigen Wandabschnitt 22 schließt sich eine Schulter 23 mit einer radial nach innen verlaufenden, ringscheibenförmigen Abschnitt 24 an, der an einem ringförmigen Verbindungsabschnitt 32 der zweiten Lageraufnahme 21 endet und mit diesem einstückig verbunden ist. Der ringförmige Verbindungsabschnitt 32 besitzt eine zylindrische Form, kann an seiner Außenseite glatt oder randriert ausgebildet sein und besitzt ein freies Ende 26, über das er in das Kopfrohr 2 im Presssitz einsetzbar ist.

In Fig. 4 ist unterhalb der ersten Lageraufnahme 14 ein Klemmring 38 mit drei einzelnen Klemmringabschnitten 39, 40, 41 angeordnet, wobei jeweils die Klemmringabschnitte 39 und 40 sowie die Klemmringabschnitte 40 und 41 über Gelenkstifte 42 bzw. 43 so miteinander verbunden sind, dass die Weite des Klemmrings 38 einstellbar ist.

Zur Justierung und Fixierung der eingestellten Weite sind die Klemmringabschnitte 39, 41 über eine Schraube 44 miteinander verbunden, wobei die Schraube 44 tangential durch eine Bohrung 45 in dem Klemmringabschnitt 39 hindurchgeführt und mit einer entsprechenden Gewindebohrung 46 in dem Klemmringabschnitt 41 verschraubt ist.

Die innere Weite des Klemmrings 38 ist so groß, dass der Klemmring 38 über den Klemmansatz 17 der ersten Lageraufnahme aufgesteckt werden kann und an der Außenseite des Klemmansatzes 17 anliegt.

In dem umlaufenden Steg 16 ist eine Durchbrechung 27 ausgebildet, über die ein Auspressen der auf den Aufnahmeansatz 15 aufgepressten Lagereinheit 10 möglich ist. Neben der in Fig. 4 dargestellten Durchbrechung 27 können dabei über den Umfang des Stegs 16 verteilt noch weitere Durchbrechungen 27 vorgesehen sein.

In analoger Weise sind in der Schulter 23 eine oder mehrere Bohrungen 28 vorgesehen, über die ein Auspressen der Lagereinheit 10 aus dem innen liegenden Aufnahmeabschnitt 20 der zweiten Lageraufnahme 21 möglich ist.

In der Schnittdarstellung nach Fig. 5 ist die lichte Weite (Innendurchmesser) des innen liegenden Aufnahmeabschnitts 20 durch einen Pfeil 29 dargestellt. Der durch den Pfeil 29 dargestellte Innendurchmesser des Aufnahmeabschnitts 20 ist kleiner als der Außendurchmesser der Lagereinheit 10, so dass diese im Presssitz in den Aufnahmeabschnitt 20 einsetzbar ist. Je nach gewünschter Lenkungsdämpfung kann das Untermaß des Aufnahmeabschnitts 20 dabei zwischen 0,04 bis 0,05 mm (minimale Lenkungsdämpfung), 0,06 bis 0,07 mm (mittlere Lenkungsdämpfung) oder beispielsweise 0,08 bis 0,09 mm (starke Lenkungsdämpfung) gegenüber dem Außendurchmesser der Lagereinheit 10 betragen.

Um einen Presssitz zwischen dem Innenring 11 der Lagereinheit 10 und dem Aufnahmeansatz 15 der ersten Lageraufnahme 14 zu erreichen, ist deren durch einen Pfeil 30 dargestellter Außendurchmesser des Aufnahmeansatzes 15 größer als der Innendurchmesser der Lagereinheit 10. Ein typisches Obermaß für den Aufnahmeansatz 15 ist beispielsweise 0,06 bis 0,07 mm.

Aus Fig. 5 ist weiterhin zu erkennen, dass die Innenfläche des ringförmigen Aufnahmeansatzes 15 in Richtung zur Lagereinheit 10 konisch aufgeweitet ausgebildet ist. Durch diese Formgebung kann im Presssitz eine optimale Vorspannung der Lagereinheit 10 erreicht werden. Weitere geeignete Formen sind weiter unten näher beschrieben.

Aus der Darstellung nach Fig. 6, in der das Steuerkopflager 8 in seinem zusammengebauten Zustand dargestellt ist, ist erkennbar, dass der Klemmansatz 17 von dem Klemmring 38 umgriffen und zwischen diesem und dem Steuerrohr 3 eingeklemmt wird. Eine Fixierung des Klemmrings 38 in axialer Richtung erfolgt dabei durch die Schulter 19 des Klemmansatzes 15. Der Verbindungsabschnitt 32 der zweiten Lageraufnahme 21 ist mit seiner Außenfläche in das untere Ende des Kopfrohrs 2 eingepresst, während zwischen der Innenfläche der Verbindungsabschnitts 32 und dem Steuerrohr 3 ein Spiel 25 vorhanden ist, so dass das Steuerrohr 3 gegenüber dem Kopfrohr 2 verdrehbar ist.

Weiterhin ist aus Fig. 6 erkennbar, dass bei zusammengesetztem Steuerkopflager 8 die Lagereinheit 10 im Presssitz zwischen dem Aufnahmeansatz 15 der ersten Lageraufnahme 14 und dem Wandabschnitt 22 der zweiten Lageraufnahme 21 liegt. Durch diesen Presssitz erfolgt eine radiale und axiale Vorspannung der Lagereinheit 10. Bei entsprechender Dimensionierung ist damit automatisch gewährleistet, dass nach der Vormontierung des Steuerkopflagers 8 dieses spielfrei und mit optimaler Kraft vorgespannt ist.

Bei der in den Fig. 4 bis 6 gezeigten Ausführungsform besitzen sowohl die radial innen liegende Oberfläche des Klemmrings 38 als auch die radial außen liegende Oberfläche des Klemmansatzes 17 eine zylindrische Form, so dass diese Flächen beim Fixieren des Klemmrings 38 sowohl in axialer als auch in Umfangsrichtung gleichmäßig aneinander anliegen. Es ist jedoch auch möglich, eine dieser Oberflächen oder beide Oberflächen so konisch auszubilden, dass der Klemmring 38 beim Zusammenziehen zuerst am Klemmansatz 17 nahe der Schulter 19 zur Anlage kommt. Auf diese Weise wird verhindert, dass beim Zusammenziehen des Klemmrings 38 im Übergangsbereich zwischen dem Klemmansatz 17 und dem umlaufenden Steg 16 Scherkräfte entstehen, durch die der Klemmansatz 17 vom Rest der ersten Lageraufnahme 14 abgeschert werden könnte. Während die radial außen liegende Oberfläche des Klemmansatzes 17 dazu in Richtung zu der Schulter 19 hin konisch aufgeweitet ausgebildet sein kann, würde sich die radial innen liegende Oberfläche des Klemmrings 38 in Richtung zu dem umlaufenden Steg hin 16 konisch aufweiten.

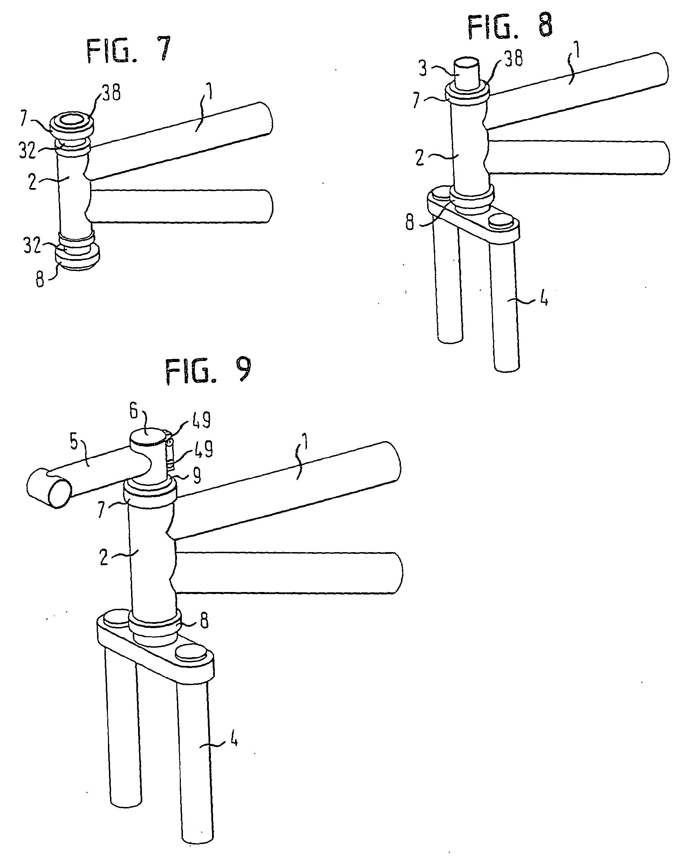

Anhand der Fig. 7, 8 und 9 wird im Weiteren die Montage einer erfindungsgemäß ausgebildeten Steuerkopflageranordnung näher erläutert.

Gemäß Fig. 7 werden zunächst die beiden Steuerkopflager 7 und 8 jeweils mit ihrem Verbindungsabschnitt 32 in das obere bzw. das untere Ende des Kopfrohrs 2 eingepresst.

Anschließend wird gemäß Fig. 8 das Steuerrohr 3 von unten in das Kopfrohr 2 eingeführt und durch dieses vollständig hindurch gesteckt, bis es die in Fig. 8 dargestellte Position erreicht.

In dieser Position wird zunächst die Schraube 44 des Klemmrings 38 des unteren Steuerkopflagers 8 angezogen, wodurch die Weite des Klemmrings 38 verkleinert wird und dadurch der zwischen dem Klemmring 38 und dem Steuerrohr 3 angeordnete Klemmansatz 17 eingeklemmt und mit dem Steuerrohr 3 drehfest verbunden wird.

In analoger Weise wird anschließend der Klemmansatz 17 des oberen Steuerkopflagers 7 über dessen Klemmring 38 mit dem Steuerrohr 3 verklemmt. Grundsätzlich kann auch zunächst das obere Steuerkopflager 7 und anschließend das untere Steuerkopflager fixiert werden.

Gemäß Fig. 9 wird im nächsten Schritt der Abdeckring 9 über das Steuerrohr 3 auf die Oberseite des oberen Steuerkopflagers 8 aufgeschoben, so dass eine optisch ansprechende Abdeckung des Klemmrings 38 sowie ein zusätzlicher Schutz vor Eindringung von Schmutz und Wasser gewährleistet ist.

Daran anschließend wird der Vorbau 5 auf das Steuerrohr 3 aufgeschoben und mit zwei Klemmschrauben 29 abschließend fixiert.

Letztlich wird zum Abschluss die Abdeckkappe 6 auf das obere Ende des Steuerrohrs 3 aufgesetzt, beispielsweise in dieses eingeschraubt oder mit diesem verrastet, womit die Montage beendet ist.

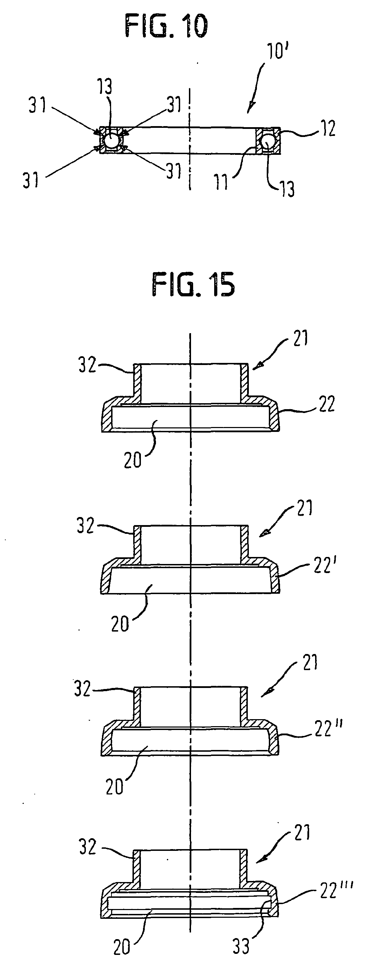

In Fig. 10 ist eine alternative Ausführungsform einer Lagereinheit 10' gezeigt, bei der diese von einem Vierpunktlager gebildet wird. Bei dem Vierpunktlager liegen die Kugellagerkugeln 13 an mit vier Pfeilen 31 gekennzeichneten Punkten des Innen- und Außenrings 11, 12 auf, so dass eine höhere Axialbelastung möglich ist und das Axial- sowie das Radialspiel kleiner eingestellt werden kann.

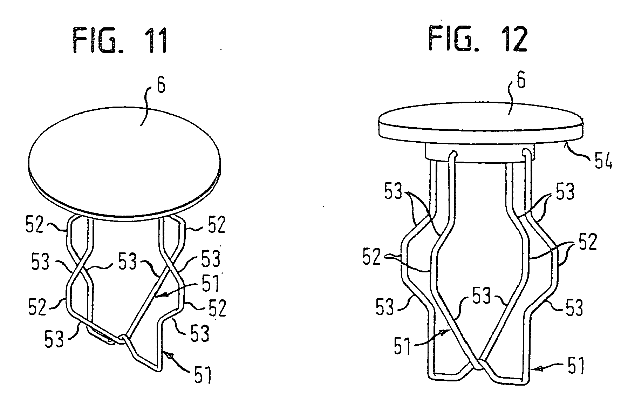

Gemäß einer in den Fig. 11 und 12 dargestellten Ausführungsform kann die Abdeckkappe 6 als Federkappe ausgebildet sein. Dazu sind an der Unterseite 54 der Abdeckkappe 6 ein oder mehrere, bevorzugt zwei Federelemente 51 vorgesehen, die in die obere Öffnung des Steuerrohrs 3 eingesetzt werden können, bis die Abdeckkappe 6 mit ihrer Unterseite 54 an der Oberkante des Steuerrohrs 3 oder des Vorbaus 5 zur Anlage kommt.

Die Federelemente 51 besitzen im Wesentlichen radial nach außen weisende Abschnitte 52, die bei aufgesetzter Abdeckkappe 6 unter Federvorspannung an der Innenseite des Steuerrohrs 3 anliegen und somit die Abdeckkappe 6 an dem Steuerrohr 3 fixieren. Gleichzeitig wird durch die federnde Ausgestaltung erreicht, dass die Abdeckkappe für Steuerrohre mit unterschiedlichen Innendurchmessern verwendbar ist. So können mit der erfindungsgemäß ausgebildeten Abdeckkappe 6 beispielsweise Unterschiede in den Innendurchmessern von bis zum +/- 3 mm oder mehr, die aufgrund unterschiedlicher Wandstärke der Steuerrohre auftreten, ausgeglichen werden.

Weiterhin besitzen die Abschnitte 52 an ihren in Längsrichtung liegenden Enden jeweils Anlaufschrägen 53, so dass sowohl das Einsetzen der Abdeckkappe 6 in als auch das Entnehmen der Abdeckkappe 6 aus dem Steuerrohr 3 leichtgängig möglich ist.

Jedes Federelement 51 wird durch einen Federdraht gebildet, dessen Enden einander gegenüberliegend an der Unterseite 54 der Abdeckkappe 6 befestigt sind. Weiterhin sind die Federelemente in Umfangsrichtung der Abdeckkappe 6 gegeneinander um 90° verdreht angeordnet, um einen sicheren und gleichmäßigen Sitz der Abdeckkappe 6 auf dem Steuerrohr 3 zu gewährleisten.

Durch die Befestigung der Steuerkopflager 7, 8 mittels des Klemmrings 38 an dem Steuerrohr 3 wird gewährleistet, dass keine die Vorspannung der Steuerlager 7, 8 beeinflussende axiale Kraft auf die Steuerkopflager 7, 8 wirkt.

Weiterhin ist durch den Klemmring 38 eine schnelle, einfache und wieder lösbare Fixierung der Steuerkopflager 7, 8 möglich, so dass sowohl die Montage als auch die Demontage sehr einfach vorgenommen werden können. Da die vormontierten Steuerkopflager 7, 8 spielfrei vorgespannt sind, ist bei der Montage eine Einstellung der Lager nicht erforderlich.

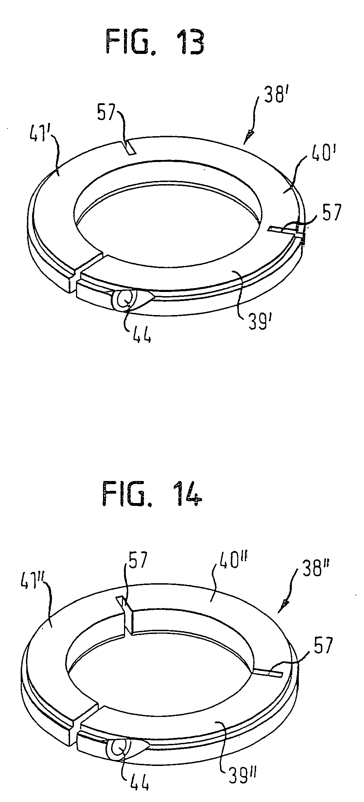

Die Fig. 13 und 14 zeigen Ausführungsformen von Klemmringen 38', 38", die jeweils einstückig ausgebildet sind. Die Verschwenkbarkeit der einzelnen Klemmringabschnitte 39', 40', 41' bzw. 39", 40", 41" erfolgt dabei nicht über Gelenkstifte, sondern dadurch, dass zur Bildung der Klemmringabschnitte 39', 40', 41' bzw. 39", 40", 41" im Wesentlichen radial verlaufende Schlitze 57 vorgesehen sind, die sich in Fig. 13 ausgehend von der Außenseite und in Fig. 14 ausgehend von der Innenseite des Klemmrings 38' bzw. 38" in radialer Richtung erstrecken. Die Länge der Schlitze 57 und die Elastizität des Klemmringmaterials ist dabei so gewählt, dass ein Verschwenken der einzelnen Klemmringabschnitte 39', 40', 41' bzw. 39", 40", 41" beim Festziehen der Schraube 44 erfolgt, so dass die Weite des Klemmrings 38', 38" verstellbar ist. Diese Ausführungsformen zeichnen sich durch eine besonders kostengünstige Herstellung aus.

Fig. 15 zeigt vier weitere Ausführungsbeispiele der zweiten Lageraufnahme 21. Die dargestellten Ausführungsbeispiele unterscheiden sich jeweils nur in der Ausgestaltung der innen liegenden, umlaufenden Wandfläche des ringförmigen Wandabschnitts 22, wodurch unterschiedliche Presssitzgestaltungen für die Lagereinheit 10 erzielt werden können. Während in Fig. 15 im ersten dargestellten Beispiel die Innenfläche des ringförmigen Wandabschnitts 22 eine zylindrische Form besitzt, ist in dem dargestellten zweiten Beispiel der ringförmige Wandabschnitt 22' an seiner Innenseite konisch ausgestaltet. Im dritten Beispiel ist der Wandabschnitt 22" an seiner Innenseite fassförmig gestaltet, während bei dem letzten Ausführungsbeispiel in Fig. 15 die Innenseite des Wandabschnitts 22"' mit einer umlaufenden Vertiefung 33 versehen ist.

Grundsätzlich ist es auch möglich, dass entsprechende Ausgestaltungen nicht an der Innenseite, sondern an der Außenseite der jeweiligen Wandabschnitte 22 bis 22"' vorgesehen sind. Es ist darüber hinaus auch möglich, dass sowohl die Innen- als auch die Außenseite des ringförmigen Aufnahmeansatzes 15 der ersten Lageraufnahme 14 in entsprechender Weise ausgestaltet ist, um eine optimale Presssitzgestaltung zu erreichen.

### Bezugszeichenliste

- 1: Fahrzeugrahmen
- 2: Kopfrohr
- 3: Steuerrohr
- 4: Gabel
- 5: Vorbau
- 6: Abdeckkappe
- 7: oberes Steuerkopflager
- 8: unteres Steuerkopflager
- 9: Abdeckring
- 10, 10': Lagereinheit/Radialkugellager
- 11: Innenring
- 12: Außenring
- 13: Kugellagerkugeln
- 14: erste Lageraufnahme
- 15: ringförmiger Aufnahmeansatz
- 16: umlaufender Steg
- 17: Klemmansatz
- 18: schlitzförmige Ausnehmungen
- 19: Schulter
- 20: innen liegender Aufnahmeabschnitt
- 21: zweite Lageraufnahme
- 22, 22', 22", 22'": ringförmiger Wandabschnitt
- 23: Schulter
- 24: Abschnitt
- 25: Spiel
- 26: freies Ende des ringförmigen Verbindungsabschnitts 32
- 27: Durchbrechung
- 28: Bohrungen
- 29: Pfeil
- 30: Pfeil
- 31 1: Pfeil
- 32: ringförmiger Verbindungsabschnitt
- 38, 38', 38": Klemmring
- 39, 39', 39": Klemmringabschnitt
- 40, 40', 40": Klemmringabschnitt
- 41, 41', 41": Klemmringabschnitt
- 42: Gelenkstift
- 43: Gelenkstift
- 44: Schraube
- 45: Bohrung
- 46: Gewindebohrung
- 49: Klemmschrauben
- 51: Federelemente
- 52: Abschnitte
- 53: Anlaufschrägen
- 54: Unterseite
- 57: Schlitze

## Patentansprüche

1. Steuerkopflager mit einer Lagereinheit (10) zum drehbaren Verbinden eines Kopfrohrs (2) mit einem durch das Kopfrohr hindurch geführten Steuerrohr (3),
**dadurch gekennzeichnet,**
**dass** eine erste Lageraufnahme (14) vorgesehen ist, die mit dem Steuerrohr (3) drehfest verbindbar ist,
**dass** eine zweite Lageraufnahme (21) vorgesehen ist, die mit dem Kopfrohr (2) drehfest verbindbar ist, und
**dass** die Lagereinheit (10) zwischen der ersten Lageraufnahme (14) und der zweiten Lageraufnahme (21) im Presssitz angeordnet ist.

2. Steuerkopflager nach Anspruch 1,
**dadurch gekennzeichnet,**
**dass** die Lagereinheit (10) durch den Presssitz spielfrei in axialer und/oder radialer Richtung vorgespannt ist.

3. Steuerkopflager nach Anspruch 1 oder 2,
**dadurch gekennzeichnet,**
**dass** die Lagereinheit (10) mit der ersten und/oder mit der zweiten Lageraufnahme (14, 21) über einen Presssitz verbunden ist.

4. Steuerkopflager nach einem der vorhergehenden Ansprüche,
**dadurch gekennzeichnet,**
**dass** ein Befestigungselement (38, 38', 38") vorgesehen ist, über das die erste Lageraufnahme (14) drehfest mit dem Steuerrohr (3) verbindbar ist.

5. Steuerkopflager nach Anspruch 4,
**dadurch gekennzeichnet,**
**dass** durch das Befestigungselement (38, 38', 38") zum Verbinden der ersten Lageraufnahme (14) mit dem Steuerrohr (3) eine in radialer Richtung wirkende Kraft zwischen der ersten Lageraufnahme (14) und dem Steuerrohr (3) erzeugbar ist.

6. Steuerkopflager nach Anspruch 5,
**dadurch gekennzeichnet,**
**dass** durch das Befestigungselement (38, 38', 38") eine ausschließlich in radialer Richtung wirkende Kraft erzeugt wird.

7. Steuerkopflager nach einem der Ansprüche 4 bis 6,
**dadurch gekennzeichnet,**
**dass** das Befestigungselement (38, 38', 38") als Klemmelement zur Erzeugung einer Klemmverbindung zwischen der ersten Lageraufnahme (14) und dem Steuerrohr (3) ausgebildet ist.

8. Steuerkopflager nach Anspruch 7,
**dadurch gekennzeichnet,**
**dass** das Klemmelement (38, 38', 38") als separates Teil ausgebildet ist.

9. Steuerkopflager nach Anspruch 7,
**dadurch gekennzeichnet,**
**dass** das Klemmelement einstückig mit der ersten Lageraufnahme (14) ausgebildet ist.

10. Steuerkopflager nach einem der Ansprüche 7 bis 9,
**dadurch gekennzeichnet,**
**dass** das Klemmelement (38, 38', 38") als Klemmring ausgebildet ist.

11. Steuerkopflager nach Anspruch 10,
**dadurch gekennzeichnet,**
**dass** der Klemmring (38, 38', 38") in seiner Weite verstellbar ist.

12. Steuerkopflager nach Anspruch 10 oder 11,
**dadurch gekennzeichnet,**
**dass** die erste Lageraufnahme (14) einen insbesondere ringförmigen Klemmansatz (17) umfasst, der von dem Klemmring (38, 38', 38") umgriffen wird, so dass der Klemmansatz (17) zwischen dem Steuerrohr (3) und dem Klemmring (38, 38', 38") einklemmbar ist.

13. Steuerkopflager nach Anspruch 12,
**dadurch gekennzeichnet,**
**dass** der Klemmansatz (17) elastisch ausgebildet ist.

14. Steuerkopflager nach einem der vorhergehenden Ansprüche,
**dadurch gekennzeichnet,**
**dass** die zweite Lageraufnahme (21) einen ein stirnseitiges freies Ende (26) aufweisenden, ringförmigen Verbindungsabschnitt (32) umfasst, der im Presssitz in das Kopfrohr (2) einsetzbar ist.

15. Steuerkopflager nach einem der vorhergehenden Ansprüche,
**dadurch gekennzeichnet,**
**dass** die Lagereinheit (10) als Radiallager mit Innen- (11) und Außenring (12) ausgebildet ist.

16. Steuerkopflager nach Anspruch 15,
**dadurch gekennzeichnet,**
**dass** die erste Lageraufnahme (15) einen insbesondere ringförmigen stirnseitigen Aufnahmeansatz (15) umfasst, auf dem der Innenring (11) der Lagereinheit (10) im Presssitz angeordnet ist.

17. Steuerkopflager nach Anspruch 16,
**dadurch gekennzeichnet,**
**dass** die radial innen und/oder außen liegende Oberfläche des Aufnahmeansatzes (15) im Wesentlichen zylindrisch, konisch oder fassförmig ausgebildet ist.

18. Steuerkopflager nach einem der vorhergehenden Ansprüche,
**dadurch gekennzeichnet,**
**dass** die zweite Lageraufnahme (21) einen innen liegenden Aufnahmeabschnitt (20) umfasst, in dem der Außenring (12) der Lagereinheit (10) im Presssitz angeordnet ist.

19. Steuerkopflager nach Anspruch 18,
**dadurch gekennzeichnet,**
**dass** der Aufnahmeabschnitt (20) in radialer Richtung nach außen von einem insbesondere ringförmigen Wandabschnitt (22) der zweiten Lageraufnahme (21) begrenzt wird.

20. Steuerkopflager nach Anspruch 19,
**dadurch gekennzeichnet,**
**dass** die radial innen liegende Oberfläche des Wandabschnitts (22) im Wesentlichen zylindrisch, konisch oder fassförmig ausgebildet ist.

21. Steuerkopflager nach Anspruch 19 oder 20,
**dadurch gekennzeichnet,**
**dass** in der radial innen liegenden Oberfläche des Wandabschnitts (22) eine oder mehrere insbesondere umlaufende Vertiefungen (25) und/oder Erhöhungen ausgebildet sind.

22. Steuerkopflager nach einem der vorhergehenden Ansprüche,
**dadurch gekennzeichnet,**
**dass** die Lagereinheit (10) als Standard-Industrielager ausgebildet ist.

23. Steuerkopflager nach einem der vorhergehenden Ansprüche,
**dadurch gekennzeichnet,**
**dass** die Lagereinheit (10) als Rillenkugellager oder als Vierpunktlager ausgebildet ist.

24. Steuerkopflager mit einem Kopfrohr (2) eines Fahrzeugrahmens (1) und einem durch das Kopfrohr (2) hindurch geführten Steuerrohr (3) einer Lenkstange des Fahrzeugs,
**dadurch gekennzeichnet,**
**dass** das Kopfrohr (2) über ein Steuerkopflager (7, 8) nach einem der vorhergehenden Ansprüche mit dem Steuerrohr (3) drehbar verbunden ist.

25. Steuerkopflager nach Anspruch 24,
**dadurch gekennzeichnet,**
**dass** das Kopfrohr (2) an seinen beiden Enden mit dem Steuerrohr (3) jeweils über ein Steuerkopflager (7, 8) nach einem der Ansprüche 1 bis 23 drehbar verbunden ist.
